# FASCICULE DE BREVET EUROPEEN

(11) **EP 0 823 027 B1**
(45) Date de publication et mention de la délivrance du brevet: **04.07.2001**
(21) Numéro de dépôt: 96913583.9
(22) Date de dépôt: 12.04.1996
(51) Int. Cl.: F04D 13/02, H02K 49/10

(54) **POMPE CENTRIFUGE A ENTRAINEMENT MAGNETIQUE**
KREISELPUMPE MIT MAGNETISCHEM ANTRIEB
MAGNETIC DRIVE CENTRIFUGAL PUMP

(30) Priorité: 14.04.1995 FR 9504525
(43) Date de publication de la demande: 11.02.1998
(73) Titulaire: Boostec SA, 65460 Bazet (FR)
(72) Inventeur: SOULIER, Jean-Pierre, F-65230 Gayan (FR)
(74) Mandataire: Martin, Jean-Jacques
(86) Numéro de dépôt international: FR9600564
(87) Numéro de publication internationale: WO9632592

(56) Documents cités:
- EP-A- 0 171 514
- EP-A- 0 171 515
- EP-A- 0 237 868
- WO-A-90/02880
- DE-U- 1 982 247
- GB-A- 2 181 184

## Description

La présente invention concerne une pompe centrifuge à entraînement magnétique, du type comportant :
- un carter étanche d'axe déterminé, délimitant autour de cet axe une chambre de pompage centrifuge présentant une entrée axiale de fluide pompé et une sortie périphérique de fluide pompé ainsi qu'un passage axial de prise de force, axialement à l'opposé de ladite entrée,
- une cloche étanche de confinement, réalisée en un matériau perméable à un flux magnétique et présentant une forme de révolution autour dudit axe, ladite cloche étant solidaire du carter et obturant ledit passage de façon étanche,
- une turbine de pompage centrifuge logée dans ladite chambre et montée à la rotation autour dudit axe par rapport au carter et à la cloche de confinement,
- un arbre moteur disposé à l'extérieur de ladite chambre, axialement à l'opposé de ladite entrée, et monté à la rotation autour dudit axe par rapport au carter et à la cloche de confinement,
- des moyens d'accouplement magnétique entre l'arbre moteur et la turbine, à la rotation autour dudit axe par rapport au carter et à la cloche de confinement, à travers celle-ci.

Dans les pompes actuellement connues, de ce type, la cloche de confinement présente une convexité d'ensemble vers l'extérieur de la chambre et elle est enveloppée par une jupe rapportée solidairement sur l'arbre moteur et présentant également une forme de révolution autour de l'axe. Cette jupe porte solidairement, autour de la cloche de confinement, des aimants permanents qui constituent une partie des moyens d'accouplement magnétique.

De façon correspondante, la cloche de confinement est concave vers l'intérieur de la chambre de pompage, qu'elle prolonge en quelque sorte axialement à l'opposé de l'entrée de fluide, afin de loger une extension axiale de la turbine portant, directement en regard des aimants permanents de la jupe montée sur l'arbre moteur, si l'on se réfère à des directions radiales en référence audit axe, des aimants permanents constituant une autre partie des moyens d'accouplement magnétique.

Ce montage connu présente un certain nombre d'inconvénients.

L'un de ces inconvénients réside en un risque d'éclatement de la cloche de confinement exposée intérieurement à la pression du fluide pompé et extérieurement à la pression atmosphérique, c'est-à-dire à une surpression intérieure qui peut être importante et doit être rapprochée de la faible épaisseur que doit nécessairement présenter la cloche de confinement pour opposer le moins possible d'obstacle au passage du flux magnétique assurant l'accouplement entre l'arbre moteur et la turbine.

Un autre inconvénient réside dans la grande complexité de réalisation des pompes ainsi conçues. En effet, la nécessité d'assurer un guidage efficace de la turbine à la rotation autour de l'axe du carter par rapport à ce dernier et par rapport à la cloche de confinement, ainsi qu'un arrêt de la turbine dans les deux sens axiaux, sans atteindre un encombrement excessif de la pompe, conduit à loger à l'intérieur de la cloche de confinement des portées appropriées, aménagées complémentairement sur l'extension axiale de la turbine et sur une extension tubulaire du carter, ce qui impose un agencement complexe qui ne peut être mise en oeuvre que par assemblage de nombreuses pièces, tant en ce qui concerne la turbine que le carter. Il en résulte un coût de fabrication élevé, une fiabilité perfectible, une grande difficulté des opérations de maintenance ou de réparation et la nécessité de réaliser plusieurs étanchéités statiques, à savoir entre les différentes pièces constituant le carter ainsi qu'entre celui-ci et la cloche de confinement.

On a également proposé, dans EP-A-0 171 514, EP-A-0 171 515 et EP-A-0 237 868, de réaliser une pompe centrifuge du type indiqué en préambule, en donnant à la cloche de confinement une forme convexe vers l'intérieur de la chambre et concave vers l'extérieur de celle-ci, en logeant une zone extrême de l'arbre moteur dans la cloche de confinement ainsi conformée, et en munissant solidairement la turbine d'une jupe de révolution autour de l'axe, enveloppant la cloche de confinement dans une zone située radialement en regard de ladite zone extrême en référence à l'axe, les moyens d'accouplement magnétique étant alors portés solidairement par ladite zone extrême et par ladite jupe.

Une telle conception permet de faire travailler la cloche de confinement dans des conditions telles qu'elle subisse de l'extérieur vers l'intérieur la pression du fluide pompé, ce qui réduit considérablement les risques d'éclatement dans des conditions identiques de pression de ce fluide pompé ainsi que de matériau constitutif et d'épaisseur de la cloche de confinement, notamment lorsque ledit matériau constitutif est, comme le proposent de façon préférée EP-A-0 171 514 et EP-A-0 171 515, un matériau céramique.

Cependant, telle qu'elle est mise en oeuvre dans EP-A-171 514, EP-A-0 171 515 et EP-A-0 237 868, elle n'est pas totalement satisfaisante en ce sens que l'on y associe un montage de la turbine à la rotation sur un arbre monté en porte-à-faux à l'intérieur de l'entrée axiale de fluide pompé. Un tel agencement entraîne nécessairement un certain encombrement de cette entrée, que l'on ne peut conformer à volonté. En outre, il reste complexe et nécessite encore un assemblage de nombreuses pièces, avec les conséquences défavorables qui en découlent en termes de difficulté et de coût de fabrication et de maintenance ou de réparation et en termes de fiabilité.

DE-U-1 982 247 illustre, par sa figure 1 qui ne fait cependant l'objet d'aucune description à cet égard, une pompe centrifuge qui semble comporter une cloche de confinement présentant la forme proposée dans EP-A-0 171 514, EP-A-0 171 515 et EP-A-0 237 868, et un montage de la turbine autour de cette cloche de confinement. Ce document préconise cependant d'assurer ce montage en rotation au moyen d'un arbre creux, par exemple en matière plastique, notamment un arbre en fibres de verre ou une douille en polytétrafluoréthylène dont le mode de coopération avec les autres composants de la pompe n'est pas précisé. Quel que soit ce mode de coopération, l'arbre creux constitue une pièce qui doit être mise en place et fixée à l'un des autres composants de la pompe dont, ainsi, le montage reste complexe et nécessite encore de nombreuses pièces, avec les inconvénients qui en découlent.

Le but de la présente invention est de remédier à certains de ces inconvénients, au moins, et de préférence à la totalité de ceux-ci.

A cet effet, la présente invention propose une pompe centrifuge à entraînement magnétique, comprenant comme le proposent EP-A-0 171 54, EP-A-0 171 515 et EP-A-0 237 868 ;
- un carter étanche d'axe déterminé, délimitant autour de cet axe une chambre de pompage centrifuge présentant une entrée axiale de fluide pompé et une sortie périphérique de fluide pompé ainsi qu'un passage axial de prise de force, axialement à l'opposé de ladite entrée,
- une cloche étanche de confinement, réalisée en un matériau perméable à un flux magnétique et présentant une forme de révolution autour dudit axe, convexe vers l'intérieur de ladite chambre et concave vers l'extérieur de celle-ci, ladite cloche étant solidaire du carter et obturant ledit passage de façon étanche,
- un arbre moteur disposé à l'extérieur de ladite chambre, axialement à l'opposé de ladite entrée, et monté à la rotation autour dudit axe par rapport au carter et à la cloche de confinement, ledit arbre moteur comportant une zone extrême logée à l'intérieur de la cloche de confinement,
- une turbine de pompage centrifuge logée dans ladite chambre et montée à la rotation autour dudit axe par rapport au carter et à la cloche de confinement, ladite turbine comportant solidairement une jupe de révolution autour dudit axe, enveloppant la cloche de confinement dans une zone située radialement en regard de ladite zone extrême en référence audit axe,
- des moyens d'accouplement magnétique entre l'arbre moteur et la turbine, à la rotation autour dudit axe par rapport au carter et à la cloche de confinement, à travers celle-ci, lesdits moyens d'accouplement magnétique étant portés solidairement par ladite zone extrême et par ladite jupe,
caractérisée en ce que la cloche de confinement et ladite jupe présentent, respectivement dans le sens d'un éloignement par rapport audit axe et dans le sens d'un rapprochement par rapport à celui-ci, au moins une portée respective, cylindrique de révolution autour dudit axe, de guidage à la rotation relative autour de celui-ci, de telle sorte que la cloche de confinement assure le montage de la turbine à la rotation autour dudit axe par rapport au carter et à la cloche de confinement.

On peut ainsi conformer à volonté l'entrée de fluide qui, en particulier, peut rester totalement dégagée.

On comprendra en outre, par la suite, qu'il est ainsi possible de simplifier considérablement le guidage de la turbine à la rotation autour de l'axe du carter par rapport à ce dernier et par rapport à la cloche de confinement, ainsi que l'arrêt de la turbine par rapport au carter et à la cloche de confinement dans les deux sens axiaux, et en conséquence de réduire le nombre de pièces nécessaires à cet effet, c'est-à-dire de réduire les coûts de fabrication, d'augmenter la fiabilité, de faciliter les opérations de maintenance et de réparation et de limiter le nombre des étanchéités statiques à réaliser.

Ainsi, on peut avantageusement prévoir que ce soit également la cloche de confinement qui assure un arrêt de la turbine en translation dans un sens axial venant de l'entrée de fluide, aussi bien par rapport à la cloche de confinement que par rapport au carter dont elle est solidaire. Le carter lui-même peut assurer l'arrêt de la turbine en translation dans le sens axial opposé, c'est-à-dire le sens axial allant vers l'entrée de fluide.

Ce guidage et cet arrêt peuvent être assurés par coopération directe de la turbine, de la cloche de confinement et du carter, sans interposition de pièces complémentaires ou avec interposition de pièces d'usure simples, grâce à un choix approprié des matériaux constitutifs respectivement correspondants.

A cet effet, on réalise avantageusement la cloche de confinement, de préférence constituée d'une seule pièce, la turbine, au moins en ce qui concerne sa jupe et de préférence intégralement avec cette jupe, et le carter, au moins dans ses zones destinées à venir au contact du fluide pompé, en un matériau céramique tel que le carbure de silicium, apte à remplir à la fois la fonction de confinement impartie à la cloche, avec perméabilité au flux magnétique, de guidage en rotation, de butée axiale, et de pompage du fluide au niveau de la turbine proprement dite, tout en présentant une bonne résistance à l'usure et aux agressions chimiques par le fluide.

En particulier, on peut alors utiliser avec satisfaction la pompe selon l'invention pour déplacer un fluide véhiculant des particules abrasives, tel que de l'eau fortement chargée en sable.

On observera que le fait que, conformément à la présente invention, la cloche de confinement soit soumise à une surpression dans un sens allant de l'extérieur vers l'intérieur permet de concilier, sans risque d'éclatement, l'utilisation de céramique et l'établissement de pressions élevées dans le fluide pompé, à l'intérieur de la chambre de pompage.

La conception de la pompe selon l'invention est compatible avec une géométrie simple du carter, si bien que ce dernier peut avantageusement délimiter la chambre de pompage par une seule pièce raccordée de façon étanche, en une seule zone annulaire entourant l'axe, à une pièce unique constituant la cloche de confinement, ce qui permet de limiter à une seule zone la réalisation d'une étanchéité statique, et par conséquent à la fois de simplifier les opérations de montage et démontage du carter lors de la maintenance ou des réparations et d'améliorer la sécurité d'utilisation de la pompe en réduisant les dangers de fuite.

En outre, le montage particulièrement simple de la turbine, autorisé par la conception conforme à la présente invention, permet de réaliser également de façon particulièrement simple des moyens de circulation de fluide pompé entre la turbine et la cloche de confinement, notamment à des fins de refroidissement. En effet, cette circulation peut résulter simplement d'effets de fuite notamment entre la turbine et la cloche de confinement et de l'aménagement d'un alésage axial de la turbine, débouchant d'une part en regard de l'entrée de fluide et d'autre part entre la turbine et la cloche de confinement. Dans le cas de la conception connue, précédemment commentée, cette circulation de fluide pompé entre la cloche de confinement et la turbine nécessite, en raison de la complexité du montage de celle-ci, de nombreux passages aménagés d'une part dans les pièces constitutives du carter et d'autre part dans la turbine elle-même, ce qui augmente la complexité de fabrication des pièces du carter et de la turbine.

Alors, lorsque la pompe est utilisée pour déplacer un fluide véhiculant des particules, on peut éviter une accumulation de celles-ci entre la turbine et la cloche de confinement en prévoyant entre ces dernières, notamment de façon solidaire de la cloche de confinement, des moyens déflecteurs conformés, en fonction d'un sens prédéterminé de rotation de la turbine par rapport à la cloche de confinement, de façon à ramener les particules vers l'axe, c'est-à-dire vers l'alésage axial de la turbine, à travers lequel elles sont ensuite éjectées vers la chambre de pompage où la turbine les prend en charge et les achemine vers la sortie de fluide pompé.

D'autres caractéristiques et avantages d'une pompe selon l'invention ressortiront de la description ci-dessous, relative à deux exemples non limitatifs de réalisation, ainsi que des dessins annexés, qui font partie intégrante de cette description.
- La figure 1 montre une pompe 1 selon l'invention, présentant un axe 2 et vue en coupe par un plan incluant cet axe, et un moteur 3, par exemple électrique, d'entraînement de cette pompe, monté coaxialement à celle-ci et vu quant à lui en élévation latérale.
- La figure 2 montre un mode de réalisation préféré de réalisation de la cloche de confinement, vue en perspective.
- La figure 3 montre, en une vue en perspective avec arrachement partiel, une pompe selon l'invention groupant des variantes d'exécution de certains détails de la pompe illustrée aux figures 1 et 2, étant entendu que ces variantes pourraient être reprises indépendamment les unes des autres dans une pompe par ailleurs conforme à celle qui est illustrée aux figures 1 et 2.

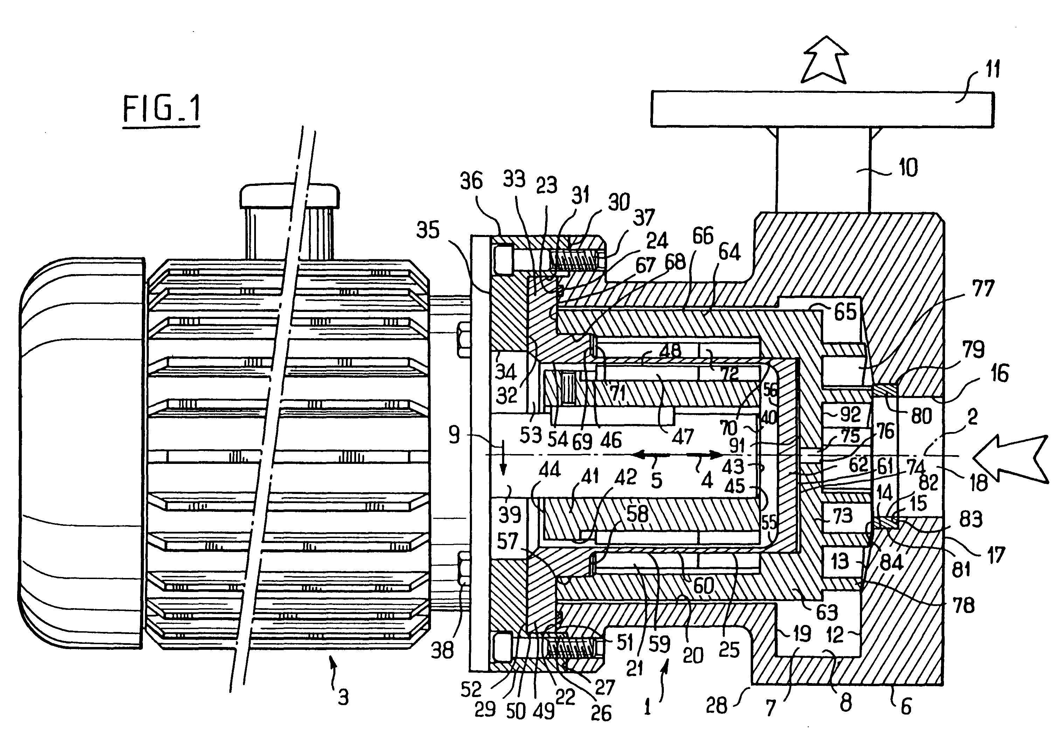

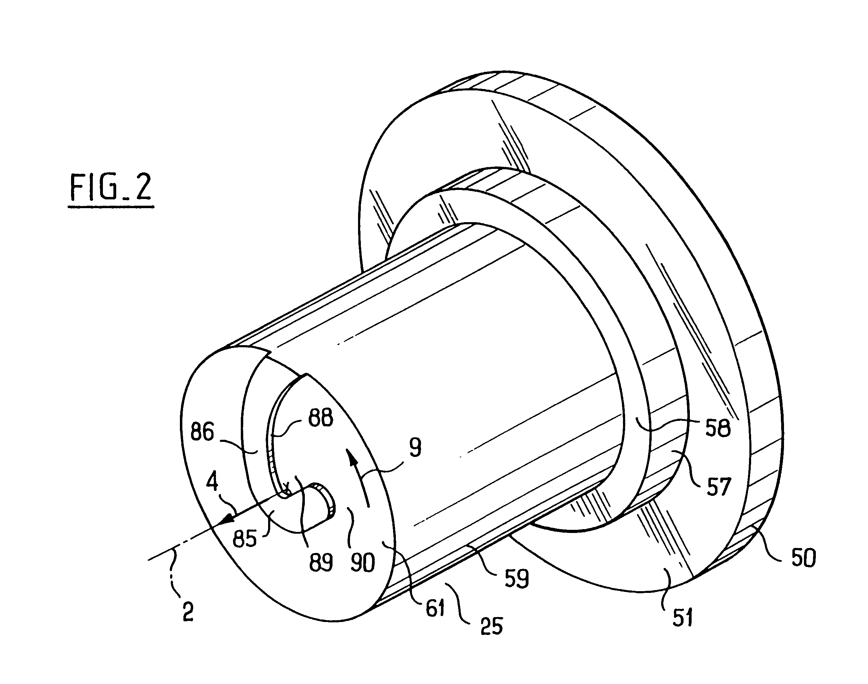

On se réfèrera en premier lieu aux figures 1 et 2, afin de décrire la pompe 1.

Par la suite, les notions de caractère axial ou radial, centrifuge ou centripète, périphérique, de même que les notions de forme de révolution et de mouvement de rotation relative s'entendront par référence à l'axe 2 qui sera en outre considéré comme définissant une direction longitudinale servant de référence aux notions de longitudinalité et de transversalité. On considérera comme périphérique intérieure une surface tournée vers cet axe et comme périphérique extérieure une surface tournée dans le sens d'un éloignement par rapport à cet axe et l'on se réfèrera également à deux sens longitudinaux ou axiaux mutuellement opposés, à savoir un sens avant 4 et un sens arrière 5.

La pompe 1 comporte un carter étanche 6 qui présente une forme générale de révolution et, conformément au mode de réalisation préféré illustré, est réalisé en une seule pièce d'un matériau céramique tel que du carbure de silicium.

Autour de l'axe 2, le carter 6 délimite intérieurement une chambre 7 de pompage de fluide, délimitée dans le sens d'un éloignement par rapport à l'axe 2 par une face périphérique intérieure 8 qui est définie par des génératrices longitudinales et présente la forme d'une volute s'écartant progressivement de l'axe 2, dans un sens déterminé 9 de rotation autour de celui-ci, sur environ 360°, lorsqu'elle est vue en coupe transversale. Dans la zone de la face 8 la plus éloignée de l'axe 2 débouche tangentiellement une sortie périphérique 10 de fluide pompé, présentant à l'extérieur du carter 6 une bride 11 de raccordement à une conduite de transport de ce fluide. Cette forme de la face périphérique intérieure 8 de la chambre de pompage 7 et la façon dont y débouche la sortie 10 de fluide pompé constituent des caractéristiques connues d'un Homme du métier, lesquelles ne seront de ce fait pas davantage décrites.

Vers l'avant, la chambre de pompage 7 est délimitée par une face transversale, plane 12, de forme annulaire, qui se raccorde en sens centrifuge à la face 8 et en sens centripète à une face 13 tronconique de révolution, tournée vers l'arrière et convergeant, faiblement, vers l'avant ; à titre d'exemple non limitatif, les génératrices de la face tronconique 13 forment un angle, non référencé, de l'ordre de 70 à 80° par rapport à l'axe 2.

La face 13 se raccorde elle-même, dans le sens d'un rapprochement vis-à-vis de l'axe 2, à une face périphérique intérieure 14 cylindrique de révolution et s'étendant vers l'avant jusqu'à une face transversale, plane 15, tournée vers l'arrière et présentant une forme annulaire de révolution. Cette face 15, qui se raccorde à la face 14 en sens centrifuge, se raccorde en sens centripète à une face périphérique intérieure 16 du carter 1, laquelle est cylindrique de révolution et raccorde ainsi la face 15, vers l'avant, à une face transversale 17 plane, tournée vers l'avant, présentant une forme annulaire et bordant de toute part la face 16. De façon non représentée, sur cette face 17 peut être fixée par tout moyen, et par exemple par bridage, une conduite d'arrivée de fluide, la face périphérique intérieure 16 définissant pour la chambre de pompage 7 une entrée axiale 18 du fluide pompé.

Vers l'arrière, la face périphérique intérieure 8 de la chambre de pompage 7 se raccorde à une autre face annulaire, transversale, plane 19 quant à elle tournée vers l'avant. Cette face 19, qui se raccorde à la face périphérique intérieure 8 en sens centrifuge, se raccorde en sens centripète à une face périphérique intérieure 20 du carter 6, laquelle est cylindrique de révolution et s'étend vers l'arrière à partir de la face 19 en délimitant autour de l'axe 2 un passage longitudinal 21, prolongeant axialement, vers l'arrière, la chambre de pompage 7.

Vers l'arrière, la face 20 se raccorde à une face transversale, plane 22, annulaire de révolution et tournée vers l'arrière, laquelle est creusée d'une gorge 23 annulaire de révolution, logeant un joint 24, également annulaire de révolution, assurant une étanchéité statique entre le carter 1 et une cloche de confinement 25, étanche mais perméable à un flux magnétique et de préférence réalisée comme le carter 6 en une seule pièce d'un matériau céramique tel que du carbure de silicium. La cloche de confinement 25, qui sera décrite plus en détail par la suite, assure ainsi une obturation étanche de la chambre 7 à l'intérieur du passage 21, et l'on observe que le joint 24 est le seul que nécessite l'établissement d'une étanchéité statique entre le carter 6 et la cloche de confinement 25.

La face annulaire 22, se raccordant à la face périphérique intérieure 20 en sens centripète, se raccorde en sens centrifuge à une face périphérique extérieure 26 cylindrique de révolution, raccordant vers l'avant la face annulaire 22 à une autre face annulaire 27 également transversale, plane, de révolution et tournée vers l'arrière. En sens centrifuge, cette face 27 se raccorde comme la face 17 à un ensemble de faces 28 de forme indifférente au regard de la présente invention, délimitant extérieurement le carter 1.

Par les faces 26 et 27 est emboîtée sur le carter 6 une bride annulaire, transversale 29 présentant à cet effet une face transversale plane 30, annulaire de révolution autour de l'axe 2, tournée vers l'avant et étroitement complémentaire de la face 27 contre laquelle elle s'applique à plat, et une face périphérique intérieure 31 cylindrique de révolution, à laquelle la face 30 se raccorde dans le sens centripète et qui présente un diamètre sensiblement identique à celui de la face périphérique extérieure 26 du carter 6 de façon à épouser celle-ci et à assurer ainsi la coaxialité de la bride 29 avec le carter 6. La dimension longitudinale de la face 31 est toutefois supérieure à celle de la face 26 et, vers l'arrière, la face 31 se raccorde à une face transversale plane 32, annulaire de révolution et tournée vers l'avant, laquelle est ainsi placée en regard de la face 22 du carter 1 en définissant toutefois un intervalle longitudinal 33 vis-à-vis de celle-ci. La face 32, se raccordant à la face 31 en sens centrifuge, se raccorde en sens centripète à une face périphérique intérieure 34 cylindrique de révolution, avec un diamètre inférieur à celui de la face périphérique intérieure 20 du carter 6, et cette face 34 raccorde elle-même vers l'arrière la face 32 à une face transversale plane 35, tournée vers l'arrière et présentant une forme annulaire de révolution. En sens centrifuge, les deux faces transversales 30 et 35 se raccordent à une même face périphérique extérieure 36 dont la forme est indifférente et qui est dans l'exemple illustré cylindrique de révolution.

La bride 29 ainsi définie est fixée de façon solidaire mais amovible au carter 6, par exemple par un boulonnage longitudinal 37, régulièrement réparti angulairement autour de l'axe 2, entre les faces 31 et 36.

Par sa face 35, la bride 29 porte de façon solidaire, par exemple par un boulonnage longitudinal 38, le moteur électrique 3, positionné de telle sorte qu'il présente en saillie vers l'avant, coaxialement à l'intérieur du passage 21, un arbre 39 de sortie de mouvement, qu'une alimentation appropriée en électricité permet de faire tourner à volonté dans le sens 9 par rapport au carter 6.

Plus précisément, l'arbre 39 présente à l'intérieur du passage 21, en retrait vers l'arrière par rapport à la chambre 7, une zone extrême avant 40 qu'enveloppe solidairement, aussi bien vis-à-vis d'une rotation autour de l'axe 2 que vis-à-vis d'une translation longitudinale dans l'un et l'autre des sens 4 et 5, un fourreau tubulaire 41 notamment délimité par une face périphérique extérieure 42 cylindrique de révolution avec un diamètre inférieur à celui de la face périphérique intérieure 34 de la bride 29 et par deux faces transversales, planes, annulaires de révolution, à raison d'une face avant 45 tournée vers l'avant et située sensiblement coplanairement avec une face d'extrémité avant 43 de l'arbre 39, immédiatement en arrière du niveau longitudinal de la face 19 de la chambre 7, et une face arrière 44 tournée vers l'arrière et située entre les niveaux longitudinaux respectifs des faces 22 et 32.

Dans la face périphérique extérieure 42 sont creusées des gorges longitudinales 46 régulièrement réparties angulairement autour de l'axe 2 et s'étendant de la face 45 jusqu'à un niveau situé immédiatement en avant de celui de la face 22, lesquelles gorges 46 reçoivent solidairement des aimants permanents 47 sous forme de barrettes longitudinales s'étendant sur la majeure partie de la dimension longitudinale des gorges 46 et délimitées en sens centrifuge par des faces respectives 48 disposée suivant un cylindre géométrique de révolution, d'un diamètre intermédiaire entre les diamètres respectifs des faces 42 et 34.

Naturellement, les aimants permanents 47 tournent autour de l'axe 2, solidairement avec l'arbre 39, lorsque celui-ci est entraîné dans le sens 9 par rapport au carter 6.

La cloche de confinement 25 est destinée à assurer une étanchéité du fluide pompé entre un ensemble formé par l'arbre 39, le fourreau 41 et les aimants 47, d'une part, et la chambre 7, d'autre part, tout en permettant un passage radial du flux magnétique des aimants 47, et elle est retenue de façon solidaire par la bride 29 sur le carter 6 avec étanchéification vis-à-vis de ce dernier par écrasement du joint 24.

A cet effet, la cloche de confinement 25 présente une zone en forme de collerette 49, annulaire de révolution, épousant l'intérieur de l'intervalle 33. A cet effet, la collerette 49 est délimitée dans le sens centrifuge par une face périphérique extérieure 50 cylindrique de révolution avec un diamètre sensiblement identique à celui de la face 31, qui assure ainsi la coaxialité de la cloche 25 et du carter 6 en chevauchant cette face 50 et la face 26 du carter, et la face 50 présente une dimension longitudinale sensiblement identique à celle qui sépare mutuellement les faces 22 et 32 lorsque la bride 29 est fixée sur le carter 6. Plus précisément, la face 50 de la collerette 49 se raccorde respectivement vers l'avant et vers l'arrière à une face transversale, plane, annulaire de révolution, de celle-ci, à savoir une face avant 51 tournée vers l'avant et prenant appui à plat sur la face 22 du carter 6 en écrasant le joint d'étanchéité 24 et une face arrière 52 tournée vers l'arrière et prenant appui à plat sur la face 32 de la bride 29 lorsque celle-ci est fixée sur le carter 6.

La face arrière 52 raccorde en sens centripète la face périphérique extérieure 50 à une facette 53 tronconique de révolution, convergeant vers l'avant en formant par rapport à l'axe 2 un angle de l'ordre de 45°, par exemple, laquelle facette 53 présente à son raccordement avec la face 52 un diamètre sensiblement identique à celui de la face 34 de la bride 29 et dans une zone extrême avant un diamètre inférieur à celui de la face 34 mais légèrement supérieur à celui du cylindre géométrique défini par les faces 48 des aimants 47.

Cette zone extrême avant, de plus faible diamètre, de la facette 53 est située à un niveau longitudinal intermédiaire entre ceux des faces 22 et 32 et définie par le raccordement de la facette tronconique 53 à une face périphérique intérieure 54, cylindrique de révolution, de la cloche de confinement 25. Cette face périphérique intérieure 54, présentant ainsi un diamètre légèrement supérieur à celui du cylindre géométrique des faces 48 des aimants 47 tout en étant inférieur à celui de la face périphérique intérieure 34 de la bride 29, s'étend de son raccordement avec la facette tronconique 53 jusqu'à un niveau longitudinal correspondant sensiblement à celui de la face 19 de la chambre 7, en avant des faces avant 43 et 45 de l'arbre 39 et du fourreau 41, c'est-à-dire notamment sur la totalité de l'étendue longitudinale des aimants 47, et se raccorde vers l'avant, par un congé 55 annulaire de révolution, à une face transversale plane 56, tournée vers l'arrière, de la cloche de confinement 25. Cette face 56 présente la forme d'un disque sécant de l'axe 2.

On notera que la facette 53, la face périphérique intérieure 54 et la face transversale 56 de la cloche de confinement 25 sont soumises à la pression atmosphérique, l'arbre 39 avec le fourreau 41 et les aimants permanents 47 évoluant à l'air libre.

La face 51 de la collerette 49 s'étend quant à elle, en sens centripète, jusqu'à une face périphérique extérieure 57 de la cloche de confinement 25, laquelle face 57 présente un diamètre intermédiaire entre les diamètres respectifs de la face périphérique intérieure 20 du carter 6 et de la face périphérique intérieure 34 de la bride 29. A partir de son raccordement avec la face 51, la face 57 s'étend vers l'avant jusqu'à un niveau longitudinal correspondant approximativement à celui de l'extrémité arrière de la gorge 46 du fourreau 41, niveau auquel elle se raccorde à une face transversale, plane 58, annulaire de révolution et tournée vers l'avant. Cette face 58 raccorde elle-même la face 57, en sens centripète, à une autre face périphérique extérieure 59, cylindrique de révolution avec un diamètre intermédiaire entre les diamètres respectifs de la face périphérique intérieure 34 de la bride 29 et de la face périphérique intérieure 54 de la cloche de confinement 25, de telle sorte que les faces 54 et 59 définissent entre elles une paroi tubulaire mince 60 perméable au flux magnétique. La face périphérique extérieure 59 s'étend ainsi vers l'avant, de son raccordement à la face 58 jusqu'à un niveau longitudinal situé légèrement en avant de celui de la face 56 de la cloche de confinement 25 et de la face 19 de la chambre de pompage 7, mais sensiblement en arrière de celui de la face 12 de cette chambre 7, et la face 59 se raccorde à ce niveau à une face transversale, plane 61, en forme de disque sécant de l'axe 2, définissant avec la face 56 de la cloche de confinement 25 une paroi transversale de fond 62 de celle-ci.

La face 51, pour partie, et les faces 57, 58, 59, 61 de la cloche de confinement 25 sont pour leur part exposées au fluide pompé, présent dans la chambre 7.

Pour assurer le pompage de ce fluide est disposée à l'intérieur de la chambre 7 une turbine 63 de préférence réalisée, comme le carter 6 et la cloche de confinement 25 respectivement, d'une seule pièce d'un matériau céramique tel que du carbure de silicium et coopérant de préférence directement avec la cloche de confinement 25 et le carter 6 pour ce qui est de son guidage à la rotation autour de l'axe 2 vis-à-vis de ces derniers et de son arrêt dans les deux sens axiaux 4 et 5.

Plus précisément, pour assurer un guidage à la rotation autour de l'axe 2 et un arrêt à la translation vers l'arrière, par coopération directe avec la cloche de confinement 25, la turbine 63 comporte solidairement, par réalisation en une seule pièce dans l'exemple préféré illustré, une jupe 64 présentant une forme de révolution et enveloppant la cloche de confinement 25 de la face 51 à la face 61 de celle-ci, c'est-à-dire notamment dans une zone située radialement en regard de la zone extrême 40 de l'arbre 39, et plus précisément des aimants permanents 47 portés par le fourreau 41 enveloppant celle-ci.

La jupe 64 n'est pas destinée à coopérer avec le carter 6 et, à cet effet, elle est délimitée en sens centrifuge par une face périphérique extérieure 65 cylindrique de révolution, avec un diamètre légèrement inférieur à celui de la face périphérique intérieure 20 du carter 6 bien que supérieur à celui de la face périphérique extérieure 57 de la cloche de confinement 25, de telle sorte que subsiste entre la face 65 de la jupe 64 et la face 20 du carter 6, sur la totalité de l'étendue longitudinale et de l'étendue périphérique des faces 65 et 20, un jeu 66 communiquant avec la chambre 7 et contenant du fluide pompé au même titre que cette dernière.

Vers l'arrière, la face périphérique extérieure 65 de la jupe 64 se raccorde à une face 67 plane, transversale, tournée vers l'arrière et présentant une forme annulaire de révolution. Par cette face 67, la turbine 63 s'appuie à plat, vers l'arrière, contre la face 51 de la cloche de confinement, et les faces 67 et 51 constituent ainsi des portées de butée axiale mutuelle, arrêtant la turbine 63 à l'encontre d'une translation vers l'arrière par rapport à l'ensemble solidaire formé par la cloche de confinement 25 et le carter 6. Du fait de la réalisation de la cloche de confinement 25 et de la turbine 63 en matériau céramique, selon un mode de mise en oeuvre préféré de la présente invention, ce contact autorise, par glissement relatif des faces 67 et 51, la rotation de la turbine 63 par rapport à cet ensemble, étant bien entendu que le choix de matériaux différents pourrait nécessiter à cet effet soit un traitement de surface à ce niveau, soit l'interposition d'un palier de butée, de conception appropriée.

En sens centripète, la face 67 raccorde la face 65, par l'intermédiaire d'une arête brisée, à une face périphérique intérieure 68 cylindrique de révolution avec un diamètre sensiblement égal à celui de la face périphérique extérieure 57 de la cloche de confinement 25, si bien que la face 68 s'appuie en sens centripète, avec possibilité de glissement relatif compte tenu du matériau préféré essentiellement choisi pour la cloche 25 et la turbine 63, sur la face 57 et que les faces 68 et 57 jouent ainsi le rôle de portées de guidage de la turbine 63 à la rotation autour de l'axe 2 par rapport à la cloche de confinement 25 et au carter 6. Dans le cas d'un choix différent du matériau constitutif de la cloche 25 et de la turbine 63, respectivement, cette coopération directe entre les faces 68 et 57 pourrait nécessiter un traitement de surface, ou être remplacée par une coopération indirecte par l'intermédiaire d'un palier approprié.

La face 68 raccorde vers l'avant la face 67 à une face 69 plane, transversale 69 qui, comme la face 67, est tournée vers l'arrière et présente une forme annulaire de révolution. La dimension longitudinale de la face 68 entre les faces 67 et 69 est légèrement supérieure à celle de la face 57 entre les faces 51 et 58, si bien que la face 69 se trouve placée en regard de la face 58, toutefois sans contact mutuel ; un Homme du métier comprendra cependant aisément que la butée de la turbine 63 vers l'arrière contre la cloche de confinement 25 pourrait également se situer à ce niveau si la dimension longitudinale de la face 68 était inférieure ou égale à celle de la face 57.

La face 69 raccorde en sens centripète la face 68 à une autre face périphérique intérieure 70 de la jupe 64 de la turbine 63, laquelle face périphérique intérieure 70 présente un diamètre sensiblement identique à celui de la face périphérique extérieure 59 de la cloche de confinement, si bien que s'établit entre ces faces, de même qu'entre les faces 68 et 57, un contact coulissant de guidage à la rotation relative autour de l'axe 2. La dimension longitudinale de la face 70 est sensiblement égale à celle de la face 59 si bien que la face 70 est ainsi placée au contact de cette dernière de la face 69 de la jupe 64 de la turbine 63 jusqu'à la jonction de la face 59 avec la face 61 de la cloche de confinement 25 et que les faces 59 et 70 jouent ainsi le rôle de portées de guidage de la turbine 63 à la rotation autour de l'axe 2 par rapport à la cloche de confinement 25 et au carter 6 sur la majeure partie de leur dimension longitudinale.

Dans une zone s'étendant longitudinalement de la face 69 au niveau des faces extrêmes 43 et 45 de l'arbre 39 et du fourreau 41 de celui-ci, respectivement, la face périphérique intérieure 70 de la jupe 64 est creusée d'autant de gorges 71 que de gorges 46, les gorges 71 étant comme ces dernières régulièrement réparties angulairement autour de l'axe 2 et recevant, de façon solidaire de la jupe 64, des aimants permanents 72 dont les polarités sont choisies par l'Homme du métier, de même que celles des aimants 47, de telle sorte que s'établisse à travers la paroi tubulaire 60 de la cloche 25 un accouplement magnétique entre les aimants 47 et 72, placés en registre respectivement de part et d'autre de cette cloche 25 en direction radiale. Ainsi s'établit à l'intérieur du passage 21 une prise de force de la turbine 63 sur l'arbre moteur 39 si bien que la rotation de l'arbre 39 dans le sens 9 par rapport à l'ensemble formé par la cloche de confinement 25 et le carter 6 s'accompagne d'une rotation de la turbine 63 dans le même sens par rapport à ces derniers.

On observe qu'entre le niveau des gorges 71 et celui de la face 61 de la cloche de confinement 25, la face périphérique intérieure 70 de la jupe 64 est continue circonférentiellement, comme la face périphérique intérieure 68, ce qui établit dans cette zone d'extrémité avant de la jupe 64, par appui centripète sur la zone de la face périphérique extérieure 59 de la cloche 25 jouxtant le raccordement de cette face avec la face 61, un contact de guidage à la rotation relative aussi efficace que celui qui s'établit entre les faces 68 et 57, dans une zone d'extrémité arrière de la jupe 64.

Vers l'avant, la face périphérique intérieure 70 de la jupe 64 et la face périphérique extérieure 65 de celle-ci se raccordent à une face transversale, plane respective, annulaire de révolution, à savoir une face 91 tournée vers l'arrière et une face 92 tournée vers l'avant, délimitant entre elles une paroi transversale plate 73. Compte tenu du dimensionnement longitudinal des faces périphériques intérieures 68 et 70 de la jupe 64 de la turbine 63, comparé à celui des faces périphériques extérieures 57 et 59 de la cloche de confinement 25, il subsiste entre les faces 71 et 61, c'est-à-dire entre les parois 62 et 73, un jeu 74 placé en communication fluidique directe avec la chambre 7 par un alésage 75 aménagé axialement à travers la paroi 73 et délimité par exemple par une face périphérique intérieure 76 se raccordant vers l'arrière à la face 91, de telle sorte que l'alésage 75 débouche dans le jeu 74, et d'autre part vers l'avant à la face 72, de telle sorte que l'alésage 75 débouche dans la chambre 7 en regard de l'entrée 18 de celle-ci.

La dimension longitudinale de la face périphérique extérieure 65 de la jupe 64 de la turbine 63 est inférieure à la distance longitudinale séparant mutuellement les faces 51 de la cloche 25 et 12 du carter 10, si bien que subsiste entre la face 72 de la paroi 73 et les faces 12 et 13 de délimitation de la chambre 7 vers l'avant un espace 77 dans lequel sont logées des pales 78 de turbine, réalisées d'une pièce avec la paroi 73 et la jupe 64 dans le mode de réalisation préféré qui a été illustré.

Les pales 78 présentent une forme incurvée, connue d'un Homme du métier, lorsqu'elles sont vues en coupe transversale de telle sorte que la rotation de la turbine 63 dans le sens 9 à l'intérieur de la chambre 7 provoque une aspiration de fluide par l'entrée 18 et une éjection du fluide ainsi pompé par la sortie 10. En direction centrifuge, elles sont limitées par un cylindre géométrique non référencé d'un diamètre sensiblement identique au diamètre du raccordement mutuel des faces 12 et 13 de la chambre 7 alors que longitudinalement, elles présentent en référence à la face 72, sur laquelle elles forment une saillie vers l'avant, une dimension longitudinale qui décroît en sens centrifuge, en correspondance avec la conicité de la face 13, de façon à être placées à proximité immédiate de celle-ci toutefois sans contact mutuel.

Pour éviter ce contact mutuel, le carter 6 présente de façon solidaire autour de l'entrée 18 de fluide une bague 79, de révolution, emboîtée dans le décrochement 80 que les faces 14 et 15 définissent, dans le carter 6, au raccordement des faces 16 et 13 de celui-ci, et constituant une portée d'arrêt, vers l'avant, pour les pales 78 et la turbine 63 dans son ensemble.

A cet effet, la bague 79, qui peut être réalisée en matériau céramique tel qu'un carbure de silicium comme l'ensemble du carter 6 et être rapportée par emboîtement vers l'avant dans le décrochement 80 même lorsque le carter 6 est réalisé dans le même matériau, afin de limiter l'usure à une pièce interchangeable par rapport au reste du carter 6, présente une face périphérique extérieure 81 cylindrique de révolution avec un diamètre identique à celui de la face périphérique intérieure 14 du décrochement 80, une face périphérique intérieure 82 cylindrique de révolution avec un diamètre identique à celui de la face 16, pour prolonger directement cette dernière vers l'arrière, jusqu'à la chambre de pompage 8, une face transversale plane 83, annulaire de révolution et tournée vers l'avant, raccordant mutuellement les faces 81 et 82 et prenant appui vers l'avant, à plat, contre la face 15 du décrochement 80, et une face transversale plane 84, également annulaire de révolution mais tournée vers l'arrière, raccordant mutuellement les faces 81 et 82 et constituant la portée d'arrêt proprement dite, contre laquelle les pales 78 sont en contact localisé vers l'avant lorsque la jupe 64 de la turbine 63 est en contact, vers l'arrière, par sa face 67 avec la face 51 de la cloche de confinement. Grâce au matériau constitutif des pales 78 et de la bague 79, ce contact autorise un glissement en relation avec la rotation de la turbine 63 autour de l'axe 2 par rapport à l'ensemble constitué par la cloche 25 et le carter 6, étant entendu que cette coopération directe entre les pales 78 et la bague 79 pourrait être facilitée par un revêtement approprié dans le cas d'un choix différent de matériaux, ou encore par interposition d'une butée rapportée présentant les caractéristiques souhaitées en relation avec sa fonction.

Naturellement, les pales 78 présentent localement, entre un niveau radial correspondant à celui de la face 14 et celui de la face 16 ou, comme il est illustré, entre celui de la face 14 et l'axe 2, une dimension longitudinale constante mesurée vers l'avant à partir de la face 72, cette dimension longitudinale étant égale à la distance séparant mutuellement les faces 72 et 84 lorsque les faces 67 et 51 sont en contact mutuel.

On observera que la rotation de la turbine 63 autour de l'axe 2 par rapport à la cloche de confinement 25 met une zone axiale de la chambre 7 en dépression par rapport au jeu 74, ce qui crée un effet de circulation du fluide pompé entre la turbine 63 et la cloche de confinement 25, mettant en oeuvre une fuite de ce fluide pompé entre la jupe 64 de la turbine 63 et la paroi tubulaire 60 de la cloche de confinement 25, d'une part, et tend à empêcher les particules éventuellement charriées par le fluide de pénétrer dans le jeu 74, d'autre part.

Toutefois, on prévoit de préférence à l'intérieur du jeu 74 des moyens déflecteurs conformés, en fonction du sens 9 de rotation de la turbine 63 par rapport à la cloche de confinement 25, de façon à ramener vers l'axe 2, c'est-à-dire vers l'alésage 75, les particules ayant éventuellement pénétré dans le jeu 74 ; la dépression précitée de la zone axiale de la chambre 7, c'est-à-dire de la zone de celle-ci dans laquelle débouche l'alésage 75, par rapport au jeu 74 crée un effet d'aspiration, à travers l'alésage 75, des particules ainsi ramenées vers l'axe 2 et leur retour dans la chambre 7, d'où les pales 78 de la turbine 63 les éjectent vers la sortie 10, avec le fluide pompé.

A titre d'exemple non limitatif de tels moyens déflecteurs, on a illustré à la figure 2 une volute 85 placée en saillie axiale, à l'intérieur du jeu 74, sur la face 61, par ailleurs plane, de la cloche de confinement 25 et avantageusement réalisée d'une pièce avec celle-ci. Cette volute 85 est délimitée vers l'avant par une face plane 86 parallèle à la face 61 et espacée axialement de celle-ci d'une dimension axiale inférieure à celle du jeu 74 mais voisine de celle-ci, en sens centrifuge par une extension localisée 87 de la face périphérique extérieure 59, et par ailleurs par un chant 88 défini par des génératrices parallèles à l'axe 2 et raccordant mutuellement les faces 86 et 61. Vers l'amont en référence au sens 9, le chant 88 présente une forme concave entre l'extension 87 et la proximité immédiate de l'axe 2 et ses zones respectivement de plus en plus proches de celui-ci sont mutuellement décalées vers l'aval en référence au sens 9 de rotation de la turbine 63 par rapport à la cloche 25. Dans ses zones les plus proches de l'axe 2, le chant 88 entoure celui-ci sur environ 90°, avec une forme cylindrique de révolution d'un diamètre correspondant sensiblement à celui de la face périphérique intérieure 76 de l'alésage 75, et forme un retour rectiligne lui communiquant la forme d'une poche 89 ouverte vers l'amont en référence au sens 9 et entourant l'axe 2. Ce retour se raccorde, dans le sens centrifuge, à une zone hémicylindrique, convexe, du chant 88, laquelle est suffisamment espacée de la face périphérique extérieure 59 pour dégager, en amont de la poche 89 en référence au sens 9, un passage 90 d'entrée des particules dans cette poche 89, où ces particules sont piégées, ramenées vers l'axe 2 par le chant 88, et éjectées à travers l'alésage 75 lorsqu'elles parviennent à proximité immédiate de l'axe 2. La forme du chant 88 est par ailleurs indifférente et, par exemple, sa zone hémicylindrique précitée est raccordée par ailleurs à l'extension localisée 87 par des zones parallèles aux zones précitées.

Un Homme du métier comprendra immédiatement la grande simplicité de la pompe qui vient d'être décrite notamment lorsque, comme il est préféré, le carter 6, la cloche de confinement 25 et la turbine 63 sont constituées d'une seule pièce respective de matériau céramique tel que du carbure de silicium, sans utilisation de pièce supplémentaire, autre que la bague 79 considérée comme une option et non comme une nécessité, pour assurer le guidage de la turbine 63 à la rotation et son arrêt dans les deux sens axiaux par rapport à l'ensemble solidaire formé par la cloche 25 et le carter 6, et en limitant à une seule zone la nécessité d'établir une étanchéité autour de la chambre 7, à savoir la zone de contact de la cloche de confinement 25 avec le carter 6.

Cependant, un Homme du métier pourra concevoir des variantes de réalisation de cette pompe sans sortir pour autant du cadre de la présente invention, notamment en choisissant un mode de réalisation différent des moyens assurant ce guidage et cet arrêt, ainsi que des matériaux constitutifs différents pour le carter 6, la cloche de confinement 25 et la turbine 23, et/ou une réalisation de l'un ou l'autre de ces derniers en plusieurs pièces assemblées mutuellement.

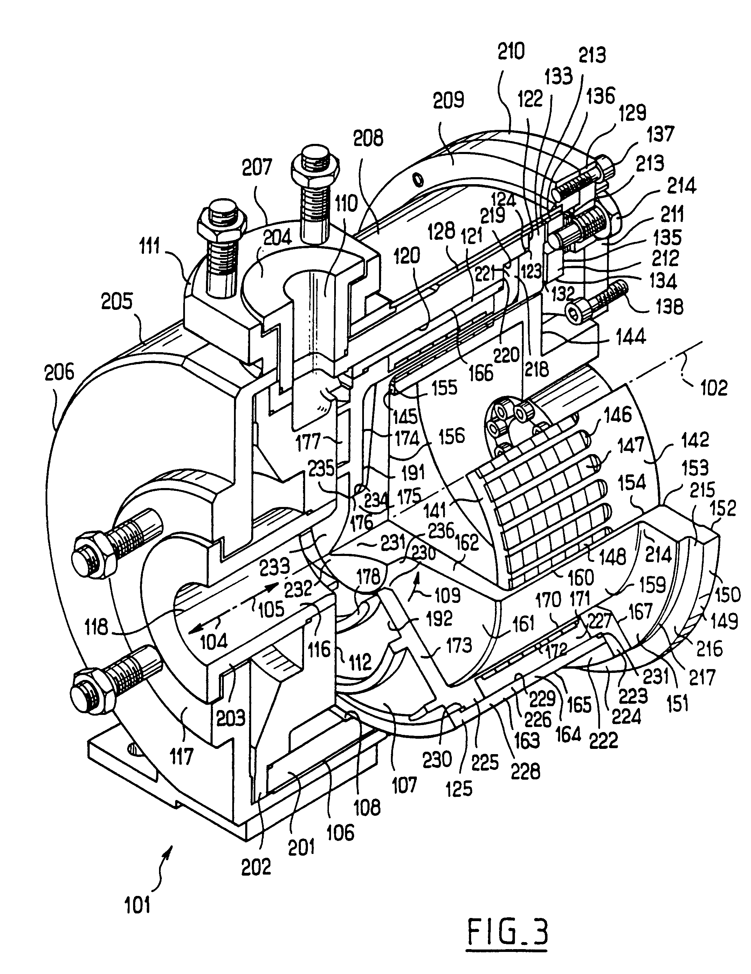

Certaines de ces variantes ressortent de la figure 3, à laquelle on se réfèrera à présent et qui montre une pompe 101 selon l'invention dans laquelle on retrouve, sous les mêmes références numériques incrémentées de 100, à l'identique ou avec des différences dont, seules, celles qui sont significatives seront décrites, les composants ou parties de composants de la pompe 1 référencés respectivement 2, 4 à 12, 16 à 18, 20 à 25, 28, 29, 32 à 38, 41, 42, 44 à 56, 59 à 67, 70 à 72, 73 à 78, 91, 92.

On se réfèrera par conséquent à la description de la pompe 1 en ce qui concerne ces composants ou parties de composants, en prenant en compte les modifications qui vont être décrites à présent, d'une part, et en observant que, même si l'on a pas illustré de moteur à la figure 3, la pompe 101 comporte comme la pompe 1 un moteur fixé par exemple par boulonnage 138 sur la bride 129 et présentant un arbre de sortie logé coaxialement à l'intérieur de la cloche de confinement 125 et portant solidairement, par une zone extrême, le fourreau 141 portant lui-même les aimants permanents 147, d'autre part.

Tout en restant une pompe centrifuge à entrée 118 axiale, la pompe 101 présente une différence par rapport à la pompe 1 en ce que la face périphérique intérieure 108 délimitant la chambre 107 de pompage de fluide dans le sens d'un éloignement par rapport à l'axe 102 ne présente pas la forme d'une volute, mais une forme cylindrique de révolution autour de l'axe 102 et se raccorde pratiquement directement, et plus précisément par l'intermédiaire d'un léger décrochement transversal non référencé, situé axialement comme la face 19 mais tourné en sens opposé, à la face périphérique intérieure 120 du carter 106. En outre, la sortie périphérique 110 de fluide pompé ne débouche pas tangentiellement dans la face 108, mais est orientée radialement en référence à l'axe 102.

La pompe 101 présente en outre une différence, vis-à-vis de la pompe 1, en ce qui concerne la réalisation pratique du carter 106.

En effet, au lieu d'être formées d'une seule pièce, ses zones appelées à venir au contact du fluide pompé sont formées d'un assemblage de plusieurs pièces avantageusement réalisées en matériau céramique, à raison d'une pièce tubulaire 201, longitudinale, présentant une forme générale de révolution autour de l'axe 102 et définissant notamment les faces 108, 120, 122, 128, à laquelle la face 122 se raccorde directement en l'absence de faces correspondant aux faces 26 et 27, d'une pièce discoïde 202 transversale, de révolution autour de l'axe 102 et définissant notamment la face 112, d'une autre pièce tubulaire 203 longitudinale, de révolution autour d'un axe 102, définissant l'entrée 118 pour le fluide pompé et comportant notamment la face 116 et une zone marginale, annulaire, radialement intérieure de la face 112 à laquelle la face 116 se raccorde par un évasement progressif, en l'absence de faces correspondant aux faces 13, 14, 15 de la pompe 1, et d'une pièce tubulaire 204 transversale, et plus précisément de révolution autour d'un axe non référencé perpendiculaire à l'axe 102, pour définir la sortie 110 de fluide pompé, ces pièces étant emboîtées mutuellement avec interposition de joints d'étanchéité de façon à assurer à elles seules l'étanchéité du carter autour du fluide pompé.

Ces pièces sont maintenues à l'état assemblé par enfermement à l'intérieur d'une enveloppe rigide 205, par exemple métallique et avantageusement réalisée elle-même par assemblage solidaire de plusieurs pièces à raison d'une pièce 206 enveloppant les pièces 202 et 203 ainsi que la partie de la pièce 201 correspondant à la chambre de pompage 107, d'une pièce 207 rapportée sur cette pièce 206 et enveloppant la pièce 204 définissant la sortie 110 de fluide pompé, d'une pièce 208 enveloppant la partie de la pièce 201 correspondant au passage 121 et se raccordant vers l'avant à la pièce 206, et d'une pièce 209 à laquelle la pièce 208 se raccorde vers l'arrière et qui, située légèrement en arrière de la collerette 149 de la cloche de confinement 125, serre la fixation de la bride 129 par boulonnage 137.

La conformation des pièces 201 à 204 et 206 à 209 pouvant varier dans une large mesure et relevant des aptitudes normales d'un Homme du métier au vu des indications ci-dessus, elle ne sera pas détaillée davantage.

La bride 129 est elle-même réalisée par assemblage de plusieurs pièces annulaires de révolution autour de l'axe 102, à savoir notamment une pièce porteuse 210 fixée par boulonnage 137 sur la pièce 209, en arrière de celle-ci, d'une pièce 211 fixée de façon solidaire sur la pièce 210, en arrière de celle-ci, et servant au boulonnage 138 du moteur non représenté, et d'une pièce 212 placée en avant de la pièce 129, à l'intérieur de la pièce 209 et de la partie de la pièce 208 adjacente à cette pièce 209. Cette pièce 212 prend appui vers l'arrière sur la pièce 210 par l'intermédiaire d'une bague 213 élastiquement compressible axialement mais elle est immobilisée à l'encontre d'une rotation autour de l'axe 102 par rapport à la pièce 210, c'est-à-dire par rapport à l'ensemble de la bride 129 et du carter 106, par exemple par emboîtement longitudinal sur des plots longitudinaux 214 fixés par boulonnage sur la pièce 210 et régulièrement répartis angulairement autour de l'axe 102. Cette pièce 212 définit les faces 132, 134, 135 et 136, la face 136 se raccordant directement à la face 132 en l'absence de faces correspondant aux faces 30 et 31 et présentant dans ce cas un diamètre sensiblement identique à celui de la face 128 définie par la pièce 201 du carter 106.

La collerette 149 de la cloche de confinement 125 ne s'emboîte alors pas dans la bride 129, mais prend simplement appui vers l'arrière, par sa face 152, sur la face 132 de la pièce 212, avec interposition d'une rondelle d'appui 213, annulaire de révolution autour de l'axe 102, dans une zone périphérique respective adjacente aux faces périphériques extérieures 136 et 149 qui, dans ce cas, présentent sensiblement le même diamètre, sensiblement identique à celui de la face périphérique extérieure 128 de la pièce 201 du carter 106.

Dans ces conditions, la coaxialité de la cloche de confinement 125 par rapport au carter 106 n'est pas assurée par la bride 129 mais par coopération directe de sa collerette 149 avec la pièce 201 du carter 106.

A cet effet, la face périphérique extérieure 150 de la collerette 149 ne se raccorde pas directement à la face 151 de celle-ci, servant de portée de butée axiale, vers l'arrière, pour la face 167 de la jupe 164 de la turbine 163 et se raccordant par contre directement, par l'intermédiaire d'un congé 214 annulaire de révolution, à la face périphérique extérieure 159 de la paroi tubulaire 160 de la cloche de confinement 125, en l'absence de faces équivalentes aux faces 57 et 58, mais par l'intermédiaire d'un décrochement 215, annulaire de révolution autour de l'axe 102 et défini par une face transversale 216 plane, annulaire de révolution et tournée vers l'avant, se raccordant à la face 150 en sens centrifuge, et par une face périphérique extérieure 217, cylindrique de révolution avec un diamètre intermédiaire entre celui de la face 120 et celui de la face 150. Cette face 217 se raccorde vers l'arrière à la face 216 et vers l'avant, par l'intermédiaire d'une arête coupée, à la face 151.

La face 216 est complémentaire de la face 122 avec laquelle elle est en contact à plat, avec compression du joint 124 dans la gorge 123 afin d'assurer l'étanchéité entre la cloche de confinement 125 et la pièce 201 du carter 106, c'est-à-dire de façon plus générale avec l'ensemble des pièces 201 à 204 constituant la partie de celui-ci en contact avec le fluide pompé.

Pour autoriser cette mise en contact de la face 216 avec la face 122, cette dernière ne se raccorde pas directement à la face 120 de la pièce 201 mais ce raccordement s'effectue par l'intermédiaire d'un décrochement 218, annulaire de révolution, de la pièce 201, ce décrochement 218 étant défini par une face périphérique intérieure 219 cylindrique de révolution autour de l'axe 102 avec un diamètre sensiblement égal à celui de la face périphérique extérieure 217 de la collerette 149 de la cloche de confinement 125 et se raccordant vers l'arrière à la face 122, et par une face transversale 220, annulaire de révolution et tournée vers l'arrière, à laquelle la face 219 se raccorde vers l'avant et qui raccorde la face 219 à la face 120. Cette face 220 est décalée axialement, vers l'avant, par rapport à la face 122, d'une distance supérieure à la distance séparant axialement la face 151 de la pièce 216 de telle sorte que, d'une part, la face 217 puisse s'emboîter à l'intérieur de la face 219, d'arrière en avant, jusqu'à ce que la face 216 vienne en appui à plat contre la face 122, comme on l'a dit plus haut, avec un effet d'emboîtement assurant un positionnement radial et axial précis de la cloche de confinement 125 par rapport au carter 106, d'une part, et que, après que cet emboîtement ait été réalisé, il subsiste entre les faces 151 et 220 une gorge 221, annulaire de révolution autour de l'axe 102, tournée vers celui-ci et délimitée par la face 219 dans le sens d'un éloignement par rapport à celui-ci.

L'aménagement de cette gorge 221 permet de regrouper à l'arrière de la jupe 164 de la turbine 163 l'appui de butée axiale de celle-ci vers l'arrière, par sa face 167, sur la face 151 de la collerette 150 de la cloche de confinement 125 et l'appui de butée axiale de la turbine 163 vers l'avant par rapport au carter 6, dans l'un et l'autre cas avec possibilité de glissement relatif autorisant la rotation de la turbine 163 autour de l'axe 102 par rapport à l'ensemble solidaire formé par le carter 106 et la cloche de confinement 125.

A cet effet, la face périphérique extérieure 165 de la jupe 164 de la turbine 163 ne se raccorde pas directement à la face 167, par contre raccordée à la face 170 directement, par l'intermédiaire d'une arête cassée, en l'absence de faces correspondant aux faces 68 et 69. Au contraire, la face 165 se raccorde vers l'arrière à une face transversale plane 222, annulaire de révolution et tournée vers l'avant, laquelle face 222 définit avec la face 167, à l'arrière de la jupe 164, un rebord en saillie radiale centrifuge et présentant la forme d'une collerette 223 annulaire de révolution autour de l'axe 102 et délimitée par ailleurs, dans le sens d'un éloignement par rapport à celui-ci, par une face périphérique extérieure 224 cylindrique de révolution autour de cet axe. La face 222 est espacée axialement de la face 167 d'une distance correspondant sensiblement à l'espacement axial entre la face 220 et la face 151 et le diamètre de la face périphérique extérieure 224 est sensiblement identique à celui de la face périphérique intérieure 219 si bien que la collerette 223 s'engage dans la gorge 221 dans des conditions propres à assurer la coaxialité de la turbine 163 par rapport au carter 106 et à la cloche de confinement 123, avec guidage localisé à la rotation relative, et que les faces 220 et 222 sont placées en appui longitudinal mutuel au même titre que les faces 167 et 151, avec possibilité de glissement relatif, et constituent des portées de butée axiale de la collerette 223, c'est-à-dire de la turbine 163, vers l'avant par rapport au carter 106.

Dans ces conditions, il n'est pas nécessaire de prévoir d'autres moyens de butée, dans quelque sens axial que ce soit, entre la turbine 163, d'une part, le carter 106 et la cloche de confinement 125, d'autre part. En particulier, la butée assurée dans le cas de la pompe 1, autour de l'entrée 18 de fluide pompé, par appui des pales 178 sur la bague 79 peut être supprimée. Aucune bague correspondant à la bague 79 n'est prévue dans la pompe 101 et les pales 178, en relation avec la conformation plane de la face 112 jusqu'à son raccordement avec la face 116, ainsi qu'avec la conformation plane de la face 192, peuvent présenter une dimension longitudinale constante sur toute leur étendue, de l'alésage 175 jusqu'à la proximité immédiate du raccordement de la face 192 avec la face 165, cette dimension étant pratiquement identique à celle qui sépare mutuellement les faces 112 et 192 mais néanmoins légèrement inférieure afin d'éviter tout contact entre les pales 178 et la face 112. Naturellement, dans un tel montage, la dimension longitudinale cumulée des faces 165 et 224 doit être inférieure à la dimension longitudinale séparant mutuellement les faces 151 et 112 pour préserver entre les faces 192 et 112 l'espace 177 logeant les pales 178, à l'intérieur de la chambre 107.

Toutefois, le guidage de la turbine 163 à la rotation autour de l'axe 102 par rapport au carter 106 et à la cloche de confinement 125 reste assuré pour l'essentiel par appui glissant de la face périphérique intérieure 170 de la jupe 164 de la turbine 163 sur la face 159 de la paroi 160 de la cloche de confinement 125, en l'absence de toutes faces correspondant aux faces 57, 58, 68, 69.

A cet égard, au lieu d'être définie pour partie par les aimants 172, la face 170 est définie dans le cas de la pompe 101 intégralement par le matériau constituant la jupe 164, c'est-à-dire de préférence par un matériau céramique tel que du carbure de silicium. A cet effet, les aimants 172 sont intégralement noyés dans la jupe 164 de la turbine 163, laquelle jupe 164 est réalisée à cet effet en plusieurs pièces. L'une 225 de ces pièces groupe la paroi 173, les pales 178, la collerette 223 et une partie tubulaire de la jupe 164 définissant la face périphérique intérieure 170 de celle-ci. Entre la face 192 et la face 222, cette pièce 225 est délimitée pour l'essentiel par une face périphérique extérieure 226 cylindrique de révolution autour de l'axe 102 avec un diamètre intermédiaire entre ceux de la face 170 et de la face 165, et les gorges 171 de réception des aimants 172 sont creusées dans cette face périphérique extérieure 226 et comblées, entre les aimants 172 et cette dernière, par une barrette longitudinale respective 227 affleurant la face 226. Autour de cette dernière est engagée une pièce 228 tubulaire, de révolution autour de l'axe 102, définissant la face périphérique extérieure 165 et une zone marginale de la face 192 et présentant par ailleurs une face périphérique intérieure 229 pour l'essentiel cylindrique de révolution autour de l'axe 102 avec un diamètre sensiblement égal à celui de la face 226. Ainsi, la pièce 228, engagée sur la pièce 225 avec contact mutuel des faces 226 et 229, appui vers l'arrière contre la face 222 de la collerette 223 et étanchéification mutuelle au moyen de joints 230, 231 convenablement intercalés entre les faces 226 et 229 d'une part à proximité immédiate de la face 192 et d'autre part à proximité immédiate de la face 222, retient les barrettes 227 et avec elles les aimants 172. On observera que, parmi ces pièces de la turbine 163, seules les pièces 225 et 228 sont au contact du fluide à pomper et sont de préférence réalisées en un matériau céramique tel que du carbure de silicium ; les barrettes 227 peuvent être réalisées en un matériau différent dans la mesure où elles ne sont pas placées au contact du fluide à pomper.

Une dernière différence de la pompe 101 par rapport à la pompe 1 réside dans la conformation de la face 161 de la cloche de confinement 125 et, concomitamment, du passage 175 assurant une communication fluidique directe entre la chambre 107 et le jeu 174 aménagé entre la face 161 de la cloche de confinement 125 et la face 191 de la turbine 163.

Alors que la face périphérique extérieure 76 du passage 75 décrit en référence à la pompe 1 présente un diamètre faible en comparaison avec celui de la face périphérique intérieure 16 de l'entrée 18 pour le fluide à pomper, la face périphérique extérieure 176 du passage 175 présente un diamètre du même ordre de grandeur que celui de la face périphérique intérieure 116, et plus précisément du raccordement de la partie évasée de celle-ci avec la face 112, et cette face périphérique intérieure 176, qui se raccorde directement à la face 192 vers l'avant, se raccorde vers l'arrière à la face 191 par l'intermédiaire d'une facette 230 tronconique de révolution autour de l'axe 102 et s'évasant vers l'arrière, en formant par rapport à l'axe 102 un angle qui est dans l'exemple illustré de l'ordre de 45° mais pourrait être différent.

La face 161 de la cloche de confinement 125 présente quant à elle, de préférence en une seule pièce avec la cloche de confinement 125, un appendice axial 231 qui fait saillie vers l'avant par rapport à elle, à l'intérieur de l'alésage 175, et présente une zone extrême 232 en forme de pointe dirigée axialement vers l'entrée 118 pour le fluide pompé, en formant un porte-à-faux axial vers l'avant à l'intérieur de la chambre 107, par rapport à la face 192 de la turbine 163.

La zone extrême 232 de l'appendice 231 présente vers l'avant une face 233 de révolution autour de l'axe 102 et de contour concave lorsqu'elle est vue en coupe par un quelconque demi-plan défini par cet axe, de façon à se raccorder tangentiellement à la face 192 de la turbine 163 dans le sens d'un éloignement par rapport à l'axe 102 et guider ainsi le fluide pompé par l'entrée 118, vers la chambre 107, avec un minimum de turbulences ; naturellement, cette face 233 n'entre en contact ni avec la face périphérique intérieure 116 de l'entrée 118 pour le fluide pompé, ni avec la face 112 de façon à ne pas constituer d'entrave au passage du fluide.

Dans le sens d'un éloignement par rapport à l'axe 102, la face 233 se raccorde à une face périphérique extérieure 234 de l'appendice 231, laquelle délimite celui-ci dans le sens d'un éloignement par rapport à l'axe 102 notamment à la traversée de l'alésage 175 et présente une forme cylindrique de révolution autour de l'axe 102 avec un diamètre légèrement inférieur à celui de la face périphérique intérieure 176 de l'alésage 165, de telle sorte qu'entre l'appendice 231 et la face périphérique intérieure 176 de l'alésage 175 subsiste un passage 235, annulaire de révolution autour de l'axe 102 et débouchant d'une part à l'intérieur de la chambre 107, en regard de l'entrée 118 et plus précisément de la périphérie de celle-ci et d'autre part dans l'espace 174 entre la turbine 163 et la cloche de confinement 125, pour permettre une circulation du fluide pompé entre la chambre 107 et l'espace 174.

La face périphérique extérieure 234 se raccorde ainsi vers l'avant à la face 233 de l'appendice 231 et se raccorde vers l'arrière, par un congé 236 annulaire de révolution autour de l'axe 102, à la face 161 qui, dans cet exemple, présente une forme légèrement tronconique de révolution autour de l'axe 102, s'évasant vers l'arrière, c'est-à-dire vers son raccordement à la face périphérique extérieure 159 de la paroi 160 de la cloche de confinement 125, ce raccordement s'effectuant par l'intermédiaire d'une arête cassée.

Un Homme du métier comprendra aisément que les différences essentielles de la pompe 101 par rapport à la pompe 1, que constituent respectivement le report des portées 220, 222 d'arrêt de la turbine 163 vers l'avant par rapport au carter 106 à l'arrière de la jupe 164 de la turbine 163, le noyage intégral des aimants permanents 172 à l'intérieur de la jupe 163, permettant d'assurer la continuité du matériau constitutif de la jupe 164 au niveau de la face 170 de celle-ci, assurant l'essentiel du guidage de la turbine 163 en rotation par rapport au carter 106 et à la cloche de confinement 125 par coopération directe avec celle-ci, l'aménagement de l'appendice 231 sur la cloche de confinement 125 conjointement à un agrandissement de l'alésage 175 et la réalisation du carter 106 et de la bride 129 en plusieurs pièces respectives, constituent des caractéristiques mutuellement indépendantes, c'est-à-dire que l'on peut retrouver indépendamment les unes des autres dans une pompe par ailleurs conforme à la pompe 1, ou encore en combinaison avec d'autres variantes d'exécution de celle-ci.

De façon plus générale, de nombreuses autres variantes des pompes 1 et 101 qui viennent d'être décrites pourront être prévues sans que l'on sorte pour autant du cadre de la présente invention, tel que défini par les revendications.

## Revendications

1. Pompe centrifuge à entraînement magnétique, comportant :
- un carter étanche (6 ; 106) d'axe déterminé (2 ; 102), délimitant autour de cet axe (2 ; 102) une chambre (7 ; 107) de pompage centrifuge présentant une entrée axiale (18 ; 118) de fluide pompé et une sortie périphérique (10 ; 110) de fluide pompé ainsi qu'un passage axial (21 ; 121) de prise de force, axialement à l'opposé de ladite entrée (18 ; 118),
- une cloche étanche (25 ; 125) de confinement, réalisée en un matériau perméable à un flux magnétique et présentant une forme de révolution autour dudit axe (2 ; 102), convexe vers l'intérieur de ladite chambre (7 ; 107) et concave vers l'extérieur de celle-ci, ladite cloche (25 ; 125) étant solidaire du carter (6; 106) et obturant ledit passage (21 ; 121) de façon étanche,
- un arbre moteur (39) disposé à l'extérieur de ladite chambre (7 ; 107), axialement à l'opposé de ladite entrée (18 ; 118), et monté à la rotation autour dudit axe (2 ; 102) par rapport au carter (6 ; 106) et à la cloche de confinement (25 ; 125), ledit arbre moteur (39) comportant une zone extrème (40) logée à l'intérieur de la cloche de confinement (25 ; 125),
- une turbine (63 ; 163) de pompage centrifuge logée dans ladite chambre (7; 107) et montée à la rotation autour dudit axe (2 ; 102) par rapport au carter (6 ; 106) et à la cloche de confinement (25 ; 125), ladite turbine (63 ; 163) comportant solidairement une jupe (64 ; 164) de révolution autour dudit axe (2 ; 102), enveloppant la cloche de confinement (25 ; 125) dans une zone située radialement en regard de ladite zone extrême (40) en référence audit axe (2 ; 102),
- des moyens (47, 72 ; 147, 172) d'accouplement magnétique entre l'arbre moteur (39) et la turbine (63 ; 163), à la rotation autour dudit axe (2 ; 102) par rapport au carter (6 ; 106) et à la cloche de confinement (25 ; 125), à travers celle-ci, lesdits moyens (47, 72 ; 147, 172) d'accouplement magnétique étant portés solidairement par ladite zone extrême (40) et par ladite jupe (64 ; 164),
caractérisée en ce que la cloche de confinement (25, 125) et ladite jupe (64 ; 164) présentent, respectivement dans le sens d'un éloignement par rapport audit axe (2 ; 102) et dans le sens d'un rapprochement par rapport à celui-ci, au moins une portée respective (57, 59, 68, 70 ; 159, 170), cylindrique de révolution autour dudit axe (2 ; 102), de guidage à la rotation relative autour de celui-ci, de telle sorte que la cloche de confinement (25 ; 125) assure le montage de la turbine (63 ; 163) à la rotation autour dudit axe (2 ; 102) par rapport au carter (6 ; 106) et à la cloche de confinement (25 ; 125).

2. Pompe selon la revendication 1, caractérisée en ce que la cloche de confinement (25 ; 125) assure un arrêt de la turbine (63 ; 163) en translation dans un sens axial (5 ; 105) venant de ladite entrée (18 ; 118).

3. Pompe selon la revendication 2, caractérisée en ce que la cloche de confinement (25 ; 125) et ladite jupe (64 ; 164) présentent, respectivement dans un sens axial (4 ; 104) allant vers ladite entrée (18 . 118) et dans un sens axial (5 ; 105) venant de celle-ci, une portée respective (51, 67 ; 151, 167), perpendiculaire audit axe (2 ; 102) et de révolution autour de celui-ci, de butée axiale mutuelle.

4. Pompe selon l'une quelconque des revendications 1 à 3, caractérisée en ce que le carter (6 ; 106) assure un arrêt de la turbine (63 ; 163) en translation dans un sens axial (4 ; 104) allant vers ladite entrée (18 ; 118).

5. Pompe selon la revendication 4, caractérisée en ce que le carter (6) comporte autour de ladite entrée (18) une portée (84) d'arrêt de la turbine (63) en translation dans un sens axial (4) allant vers cette entrée (18).

6. Pompe selon la revendication 4, caractérisée en ce que le carter (166) et ladite jupe (164) présentent, respectivement dans un sens axial (105) venant de ladite entrée (118) et dans un sens axial (104) allant vers celle-ci, une portée respective (220, 222), perpendiculaire audit axe (102) et de révolution autour de celui-ci,de butée axiale mutuelle.

7. Pompe selon la revendication 6 en combinaison avec la revendication 3, caractérisée en ce que ladite jupe (164) comporte solidairement, axialement à l'opposé de la turbine (163), un rebord annulaire (223), de révolution autour dudit axe (102) et en saillie radiale dans le sens d'un éloignement par rapport à celui-ci, ledit rebord (223) étant délimité, respectivement dans le sens axial (105) venant de ladite entrée (118) et dans le sens axial (104) allant vers celle-ci, par lesdites portées (167, 222) de ladite jupe (164), et en ce que ladite portée (151) de la cloche de confinement (125) et ladite portée (220) du carter (106) sont disposées face à face axialement et définissent entre elles une gorge annulaire (221) de révolution autour dudit axe (102), dans laquelle est engagé ledit rebord (223).

8. Pompe selon l'une quelconque des revendications 1 à 7, caractérisée en ce que la turbine (63 ; 163) présente des moyens (75 ; 175) de circulation de fluide pompé entre elle et la cloche de confinement.

9. Pompe selon la revendication 8, caractérisée en ce que lesdits moyens (75 ; 175) de circulation de fluide pompé entre la turbine (63 ; 163) et la cloche de confinement (25 ; 125) comportent un alésage axial (75 ; 175) de la turbine (63 ; 163), débouchant d'une part en regard de ladite entrée (18 ; 118) et d'autre part entre la turbine (63 ; 163) et la cloche de confinement (25 ; 125).

10. Pompe selon la revendication 9, caractérisée en ce qu'elle comporte entre la turbine (63) et la cloche de confinement (25) des moyens déflecteurs (85) conformés, en fonction d'un sens prédéterminé (9) de rotation de la turbine (63), de façon à ramener d'éventuelles particules vers ledit axe (2) et vers l'alésage axial (75) de la turbine (63).

11. Pompe selon la revendication 10, caractérisée en ce que les moyens déflecteurs (85) sont portés solidairement par la cloche de confinement (25).

12. Pompe selon la revendication 11, caractérisée en ce que la cloche de confinement (125) comporte solidairement un appendice axial (231) en saillie vers ladite entrée (118), à l'intérieur dudit alésage axial (715) de la turbine (163), et en ce que cet appendice (231) et cet alésage (175) délimitent entre eux un passage (235) annulaire de révolution autour dudit axe (102), débouchant d'une part en regard de ladite entrée (118) et d'autre part entre la turbine (163) et la cloche de confinement (125).

13. Pompe selon la revendication 12, caractérisée en ce que ledit appendice (231) présente une zone extrême (232) en forme de pointe dirigée axialement vers ladite entrée (118) et formant un porte-à-faux axial à l'intérieur de ladite chambre (107).

14. Pompe selon l'une quelconque des revendications 1 à 13, caractérisée en ce que la cloche de confinement (25 ; 125) est réalisée en une seule pièce.

15. Pompe selon la revendication 14, caractérisée en ce que le carter (6) délimite par ailleurs ladite chambre (7 ; 107) par une seule pièce raccordée de façon étanche à la pièce constituant la cloche de confinement (25) en une seule zone annulaire (22, 51) entourant ledit axe (2).

16. Pompe selon l'une quelconque des revendications 1 à 15, caractérisée en ce que la cloche de confinement (25 ; 125) est réalisée en matériau céramique.

17. Pompe selon l'une quelconque des revendications 1 à 16, caractérisée en ce que le carter (6 ; 106) est réalisé en matériau céramique au moins dans ses zones destinées à venir au contact du fluide pompé.

18. Pompe selon l'une quelconque des revendications 1 à 17, caractérisée en ce que la turbine (63) est réalisée en une seule pièce avec sa jupe (64 ; 164).

19. Pompe selon l'une quelconque des revendications 1 à 18, caractérisée en ce que les moyens (172) d'accouplement magnétique portés solidairement par ladite jupe (164) sont intégralement noyés dans celle-ci.

20. Pompe selon l'une quelconque des revendications 1 à 19, caractérisée en ce que la turbine (63 ; 163) est réalisée en matériau céramique au moins en ce qui concerne sa jupe (64 ; 164).

21. Pompe selon l'une quelconque des revendications 16, 17, 20, caractérisée en ce que ledit matériau céramique est du carbure de silicium.

## Patentansprüche

1. Kreiselpumpe mit magnetischem Antrieb, umfassend:
- ein dichtes Gehäuse (6; 106) mit bestimmter Achse (2; 102), das rund um diese Achse (2; 102) eine Kreiselpumpenkammer (7; 107) begrenzt, die einen axialen Einlaß (18; 118) für gepumptes Strömungsmittel und einen umfangsseitigen Auslaß (10; 110) für gepumptes Strömungsmittel sowie einen axialen Kanal (21; 121) zur Kraftentnahme, axial dem genannten Einlaß (18; 118) gegenüberliegend, darbietet,
- eine dichte Umhüllungsglocke (25; 125), die aus einem Material hergestellt ist, das für magnetischen Fluß durchlässig ist, und eine Rotationsform rund um die genannte Achse (2; 102) darbietet, konvex zur Innenseite der genannten Kammer (7; 107) hin und konkav zu deren Außenseite hin, wobei die genannte Glocke (25; 125) fest mit dem Gehäuse (6; 106) verbunden ist und den genannten Kanal ( 21; 121) dicht verschließt,
- eine Antriebswelle (39), die außerhalb der genannten Kammer (7; 107) und dem genannten Einlaß (18; 118) axial gegenüberliegend angeordnet ist sowie zur Drehung rund um die genannte Achse (2; 102) bezüglich des Gehäuses (6; 106) und der Umhüllungsglocke (25; 125) angebracht ist, wobei die genannte Antriebswelle (39) einen Endbereich (40) aufweist, der im Inneren der Umhüllungsglocke (25; 125) sitzt,
- eine Kreiselpumpturbine (63; 163), die in der genannten Kammer (7; 107) sitzt und zur Drehung rund um die genannte Achse (2; 102) bezüglich des Gehäuses (6; 106) und der Umhüllungsglocke (25; 125) angebracht ist, wobei die genannte Turbine (63; 163) in fester Verbindung eine Schürze (64; 164) zur Rotation um die genannte Achse (2; 102) aufweist, die die Umhüllungsglocke (25; 125) in einem Bereich umschließt, der radial dem genannten Endbereich (40) gegenüberliegt, bezogen auf die genannte Achse (2; 102), und
- Mittel (47, 72; 147, 172) zur magnetischen Ankoppelung zwischen der Antriebswelle (39) und der Turbine (63; 163), zur Drehung um die genannte Achse (2; 102) bezüglich des Gehäuses (6; 106) und der Umhüllungsglocke (25; 125), durch diese hindurch, wobei die genannten Mittel (47, 72; 147, 172) zur magnetischen Ankoppelung in fester Verbindung vom genannten Endbereich (40) und von der genannten Schürze (64; 164) getragen sind,
dadurch gekennzeichnet, daß die Umhüllungsglocke (25; 125) und die genannte Schürze (64; 164) in Richtung einer Entfernung längs der genannten Achse (2; 102) bzw. in Richtung einer Annäherung längs dieser mindestens eine jeweilige, zylindrische Rotationsfläche (57, 59, 68, 70; 159, 170) rund um die genannte Achse (2; 102) zur Führung bei der relativen Drehung rund um diese derart aufweisen, daß die Umhüllungsglocke (25; 125) die Montage der Turbine (63; 163) zur Drehung rund um die genannte Achse (2; 102) in Bezug auf das Gehäuse (6; 106) und auf die Umhüllungsglocke (25; 125) sicherstellt.

2. Pumpe nach Anspruch 1, dadurch gekennzeichnet, daß die Umhüllungsglocke (25; 125) eine Sperrung der Turbine (63; 163) bei der Translationsbewegung in einer axialen Richtung (5; 105) sicherstellt, die vom genannten Einlaß (18; 118) herkommt.

3. Pumpe nach Anspruch 2, dadurch gekennzeichnet, daß die Umhüllungsglocke (25; 125) und die genannte Schürze (64; 164) in einer axialen Richtung (4; 104), die zum genannten Einlaß (18; 118) hinführt, bzw. in einer axialen Richtung (5; 105), die von dieser herkommt, eine jeweilige Fläche (51, 67; 151, 167), die senkrecht zur genannten Achse (2; 102) verläuft und eine Rotationsfläche rund um diese ist, für den gegenseitigen axialen Anschlag aufweisen.

4. Pumpe nach irgendeinem der Ansprüche 1 bis 3, dadurch gekennzeichnet, daß das Gehäuse (6; 106) eine Sperrung der Turbine (63; 163) bei der Translationsbewegung in einer axialen Richtung (4; 104) sicherstellt, die zum genannten Einlaß (18; 118) hinläuft.

5. Pumpe nach Anspruch 4, dadurch gekennzeichnet, daß das Gehäuse (6) rund um den genannten Einlaß (18) eine Sperrfläche (84) für die Turbine (63) bei der Translationsbewegung in einer axialen Richtung (4) sicherstellt, die zum genannten Einlaß (18) hinläuft.

6. Pumpe nach Anspruch 4, dadurch gekennzeichnet, daß das Gehäuse (166) und die genannte Schürze (164) in einer axialen Richtung (105), die vom genannten Einlaß (118) herkommt, bzw. in einer axialen Richtung (104), die zu diesem hinläuft, eine jeweilige Fläche (220, 222) zum gegenseitigen, axialen Anschlag aufweisen, die senkrecht zur genannten Achse (102) verläuft und eine Rotationsfläche rund um diese bildet.

7. Pumpe nach Anspruch 6 in Kombination mit Anspruch 3, dadurch gekennzeichnet, daß die genannte Schürze (164) in fester Verbindung, der Turbine (163) axial gegenüberliegend, eine axiale Randleiste (223) aufweist, die eine Rotationsfigur um die genannte Achse (102) bildet und radial in Richtung einer Entfernung bezüglich dieser vorspringt, wobei die genannte Randleiste (223) in der axialen Richtung (105), die vom genannten Einlaß (118) herkommt, und in der axialen Richtung (104), die zu diesem hinläuft, durch die genannten Flächen (167, 222) der genannten Schürze (164) begrenzt ist, und daß die genannte Fläche (151) der Umhüllungsglocke (125) und die genannte Fläche (220) des Gehäuses (106) axial unmittelbar gegenüberliegend angeordnet sind und zwischeneinander eine ringförmige Auskehlung (221) bilden, die eine Rotationsfigur rund um die genannte Achse (102) bildet und in die die genannte Randleiste (223) eingreift.

8. Pumpe nach irgendeinem der Ansprüche 1 bis 7, dadurch gekennzeichnet, daß die Turbine (63; 163) Mittel (75; 175) zum Strömungsmittelumlauf zwischen ihr und der Umhüllungsglocke aufweist.

9. Pumpe nach Anspruch 8, dadurch gekennzeichnet, daß die genannten Mittel (75; 175) zum Umlauf von gepumptem Strömungsmittel zwischen der Turbine (63; 163) und der Umhüllungsglocke (25; 125) eine Axialbohrung (75; 175) der Turbine (63; 163) aufweisen, die einerseits dem genannten Einlaß (18; 118) zugewandt ist und andererseits zwischen der Turbine (63; 163) und der Umhüllungsglocke (25; 125) einmündet.

10. Pumpe nach Anspruch 9, dadurch gekennzeichnet, daß sie zwischen der Turbine (63) und der Umhüllungsglocke (25) Ablenkmittel (85) aufweist, die in Abhängigkeit von einer vorbestimmten Drehrichtung (9) der Turbine (63) derart ausgebildet sind, daß gegebenenfalls vorliegende Partikel zur Achse (2) hin und zur axialen Bohrung (75) der Turbine (63) hin mitgenommen werden.

11. Pumpe nach Anspruch 10, dadurch gekennzeichnet, daß die Ablenkmittel (85) in fester Verbindung von der Umhüllungsglocke (25) getragen sind.

12. Pumpe nach Anspruch 11, dadurch gekennzeichnet, daß die Umhüllungsglocke (125) in fester Verbindung einen axialen Ansatz (231) aufweist, der gegen den genannten Einlaß (118) im Inneren der genannten Axialbohrung (715) der Turbine (163) vorspringt, und daß dieser Ansatz (231) und diese Bohrung (175) zwischeneinander einen ringförmigen Kanal (235) begrenzen, der eine Rotationsfigur um die genannte Achse (102) bildet sowie einerseits zum genannten Einlaß (118) und andererseits zwischen der Turbine (163) und der Umhüllungsglocke (125) mündet.

13. Pumpe nach Anspruch 12, dadurch gekennzeichnet, daß der genannte Ansatz (231) einen Endbereich (232) in Form einer Spitze darbietet, die axial gegen den genannten Einlaß (118) gerichtet ist und im Inneren der genannten Kammer (107) einen axialen Vorsprung bildet.

14. Pumpe nach irgendeinem der Ansprüche 1 bis 13, dadurch gekennzeichnet, daß die Umhüllungsglocke (25; 125) aus einem einzigen Stück gebildet ist.

15. Pumpe nach Anspruch 14, dadurch gekennzeichnet, daß das Gehäuse (6) im übrigen die genannte Kammer (7; 107) durch ein einziges Teil begrenzt, das dicht mit dem Teil verbunden ist, das die Umhüllungsglocke (25) bildet, und zwar in einem kreisringförmigen Bereich (22, 51), der die genannte Achse (2) umgibt.

16. Pumpe nach irgendeinem der Ansprüche 1 bis 15, dadurch gekennzeichnet, daß die Umhüllungsglocke (25; 125) aus einem keramischen Material hergestellt ist.

17. Pumpe nach irgendeinem der Ansprüche 1 bis 16, dadurch gekennzeichnet, daß das Gehäuse (6; 106) mindestens in seinen Bereichen, die dazu bestimmt sind, mit dem gepumpten Stromungsmittel in Kontakt zu kommen, aus keramischen Material hergestellt ist.

18. Pumpe nach irgendeinem der Ansprüche 1 bis 17, dadurch gekennzeichnet, daß die Turbine (63) zusammen mit ihrer Schürze (64; 164) aus einem einzigen Stück hergestellt ist.

19. Pumpe nach irgendeinem der Ansprüche 1 bis 18, dadurch gekennzeichnet, daß die Mittel (172) zur magnetischen Ankoppelung, die in fester Verbindung von der der genannten Schürze (164) getragen sind, in diese gänzlich eingelassen sind.

20. Pumpe nach irgendeinem der Ansprüche 1 bis 19, dadurch gekennzeichnet, daß die Turbine (63; 163) mindestens, was ihre Schürze (64; 164) betrifft, aus einem keramischen Material hergestellt ist.

21. Pumpe nach irgendeinem der Ansprüche 16, 17, 20, dadurch gekennzeichnet, daß das genannte keramische Material Siliziumkarbid ist.

## Claims

1. Magnetic drive centrifugal pump including:
- a sealed housing (6; 106) having a particular axis (2; 102), delimiting around this axis (2; 102) a centrifugal pumping chamber (7; 107) having an axial pumped fluid inlet (18; 118) and a peripheral pumped fluid outlet (10; 110) together with an axial transmission passage (21; 121) axially opposite said inlet (18; 118),
- a sealed confinement casing (25; 125) made from a material permeable to a magnetic flux and having a circular shape concentric with said axis (2; 102), convex towards the interior of said chamber (7; 107) and concave towards the exterior thereof, said casing (25; 125) being fastened to the housing (6; 106) and shutting off said passage (21; 121) in a sealed manner,
- a drive shaft (39) external of said chamber (7; 107), axially opposite said inlet (18; 118) and mounted to rotate about said axis (2; 102) relative to the housing (6; 106) and to the confinement casing (25; 125), said drive shaft (39) having an end area (40) accommodated inside the confinement casing (25; 125),
- a centrifugal pumping turbine (63; 163) accommodated in said chamber (7; 107) and mounted to rotate about said axis (2; 102) relative to the housing (6; 106) and the confinement casing (25; 125), said turbine (63; 163) having fastened to it a circular skirt (64; 164) concentric with said axis (2; 102), surrounding the confinement casing (25; 125) in an area radially facing said end area (40) with reference to said axis (2; 102),
- means (47, 72; 147, 172) for magnetically coupling the drive shaft (39) and the turbine (63; 163) via the confinement casing (25; 125) for rotation about said axis (2; 102) relative to the housing (6; 106) and to said confinement casing, said magnetic coupling means (47, 72; 147, 172) being fastened to said end area (40) and said skirt (64; 164),
characterized in that the confinement casing (25; 125) and said skirt (64; 164) have, respectively in the direction away from said axis (2; 102) and in the direction towards the latter, at least one respective circular cylindrical bearing surface (57, 59, 68, 70; 159, 170) concentric with said axis (2; 102) for guiding relative rotation about the latter, such that the confinement casing (25; 125) ensures the mounting of the turbine (63; 163) in rotation about said axis (2; 102) relative to the housing (6; 106) and to the confinement casing (25; 125).

2. Pump according to Claim 1, characterized in that the confinement casing (25; 125) immobilizes the turbine (63; 163) in translation in an axial direction (5; 105) away from said inlet (18; 118).

3. Pump according to Claim 2, characterized in that the confinement casing (25; 125) and said skirt (64; 164) have, respectively in an axial direction (4; 104) towards said inlet (18; 118) and in an axial direction (5; 105) away from the latter, a respective circular mutual axial abutment bearing surface (51, 67; 151, 167) perpendicular to and concentric with said axis (2; 102).

4. Pump according to any one of Claims 1 to 3, characterized in that the housing (6; 106) immobilizes the turbine (63; 163) in translation in an axial direction (4; 104) towards said inlet (18; 118).

5. Pump according to Claim 4, characterized in that the housing (6) includes around said inlet (18) a bearing surface (84) immobilizing the turbine (63) in translation in an axial direction (4) towards said inlet (18).

6. Pump according to Claim 4, characterized in that the housing (106) and said skirt (164) have, respectively in an axial direction (105) away from said inlet (118) and in an axial direction (104) towards the latter, a respective circular mutual axial abutment bearing surface (220, 222) perpendicular to and concentric with said axis (102).

7. Pump according to Claim 6 in combination with Claim 3, characterized in that said skirt (164) has fastened to it, axially opposite the turbine (163), a circular annular rim (223) concentric with and projecting radially away from said axis (102), said rim (223) being delimited respectively in the axial direction (105) away from said inlet (118) and in the axial direction (104) towards the latter by said bearing surfaces (167, 222) of said skirt (164), and in that said bearing surface (151) of the confinement casing (125) and said bearing surface (220) of the housing (106) are disposed face to face in the axial direction and define between them a circular annular groove (221) concentric with said axis (102) in which said rim (223) is engaged.

8. Pump according to any one of Claims 1 to 7, characterized in that the turbine (63; 163) has means (75; 175) for circulating pumped fluid between it and the confinement casing.

9. Pump according to Claim 8, characterized in that said means (75; 175) for circulating pumped fluid between the turbine (63; 163) and the confinement casing (25; 125) include an axial bore (75; 175) in the turbine (63; 163) opening on the one hand facing said inlet (18; 118) and on the other hand between the turbine (63; 163) and the confinement casing (25; 125).

10. Pump according to Claim 9, characterized in that it includes between the turbine (63) and the confinement casing (25) deflector means (85) conformed, in accordance with a predetermined direction (9) of rotation of the turbine (63), so as to return any particles towards said axis (2) and towards the axial bore (75) in the turbine (63).

11. Pump according to Claim 10, characterized in that the deflector means (85) are carried by the confinement casing (25).

12. Pump according to Claim 11, characterized in that the confinement casing (125) has fastened to it an axial appendix (231) projecting towards said inlet (118) inside said axial bore (175) in the turbine (163), and in that said appendix (231) and said bore (175) delimit between them a circular annular passage (235) concentric with said axis (102), opening on the one hand facing said inlet (118) and on the other hand between the turbine (163) and the confinement casing (125).

13. Pump according to Claim 12, characterized in that said appendix (231) has an end area (232) in the form of a point directed axially towards said inlet (119) and forming an axial cantilever within said chamber (107).

14. Pump according to any one of Claims 1 to 13, characterized in that the confinement casing (25; 125) is in one piece.

15. Pump according to Claim 14, characterized in that the housing (6) moreover delimits said chamber (7; 107) by means of a single piece connected and sealed to the piece constituting the confinement casing (25) in a single annular area (22, 51) around said axis (2).

16. Pump according to any one of Claims 1 to 15, characterized in that the confinement casing (25; 125) is made of a ceramic material.

17. Pump according to any one of Claims 1 to 16, characterized in that at least the areas of the housing (6; 106) adapted to come into contact with the pumped fluid are made of a ceramic material.

18. Pump according to any one of Claims 1 to 17, characterized in that the turbine (63) and its skirt (64; 164) are in one piece.

19. Pump according to any one of Claims 1 to 18, characterized in that the magnetic coupling means (172) carried by said skirt (164) are entirely buried in the latter.

20. Pump according to any one of Claims 1 to 19, characterized in that at least the skirt (64; 164) of the turbine (63; 163) is made from a ceramic material.

21. Pump according to any one of Claims 16, 17, 20, characterized in that said ceramic material is silicon carbide.
